# EUROPÄISCHE PATENTSCHRIFT

(11) **EP 0 419 982 B1**
(45) Veröffentlichungstag und Bekanntmachung des Hinweises auf die Patenterteilung: **20.04.1994**
(21) Anmeldenummer: 90117805.3
(22) Anmeldetag: 15.09.1990
(51) Int. Cl.: B29C 47/02, B29C 47/06

(54) **Verfahren und Anlage zum Herstellen von Verbundprofilsträngen**
Method and installation for manufacturing composite extrudates
Procédé et installation de fabrication de profilés composites

(30) Priorität: 26.09.1989 CH 3485/89
(43) Veröffentlichungstag der Anmeldung: 03.04.1991
(73) Patentinhaber: HAKA AG FABRIK FÜR KUNSTSTOFFPRODUKTE, CH-9202 Gossau (CH)
(72) Erfinder: Luder, Fritz, CH-9203 Niederwil (CH)
(74) Vertreter: Patentanwälte Schaad, Balass, Menzl & Partner AG

(56) Entgegenhaltungen:
- EP-A- 0 154 931
- EP-A- 0 246 019
- FR-A- 2 152 383
- US-A- 3 834 009

## Beschreibung

Die vorliegende Erfindung betrifft ein Verfahren zum Herstellen von Profilsträngen mit einem Kunststoff-Metallverbund gemäss dem Oberbegriff des Anspruches 1, sowie eine Anlage zur Durchführung des Verfahrens gemäss dem Oberbegriff des Patentanspruches 7.

Verbundprofile dieser Art, insbesondere in Form von Kunststoff-Metall-Kunststoff-Verbundrohren, werden vor allem in der Sanitär- und Heizungstechnik eingesetzt, wo man die aus der Kombination von Kunststoff und Metall resultierenden Vorteile nutzen will.

Solche Profile werden im allgemeinen durch Extrudieren (Strangpressen) eines Innenprofils aus Kunststoff, Auftragen einer ersten Kleberschicht (oder Primerschicht) auf das Innenprofil, Aufbringen und Profilieren eines Metallbandes auf die erste Kleberschicht und Aufbringen einer zweiten Kleberschicht auf das profilierte Metallband und danach Aufbringen der äusseren Kunststoffschicht auf die zweite Kleberschicht, hergestellt. Mithin umfassen die bekannten Verfahren fünf Hauptschritte mit weiteren dazwischen geschalteten zusätzlichen Operationen, wie Kühlen, Messen und Wiedererwärmen. Da es in der Praxis unmöglich ist, den Ablauf dieser zum Teil sehr verschiedenartigen Vorgänge voll aufeinander abzustimmen, d.h. zu synchronisieren, entstehen im Produkt unerwünschte Spannungen, im Extremfall sogar Unterbrüche. Ausserdem ist der Platzbedarf einer Anlage zur Durchführung eines solchen Verfahrens sehr gross, insbesondere in der Längenausdehnung.

Ein weiterer, im Laufe eines Produktionstages mehrfach wiederkehrender Anlass für die Produktion von grösseren Mengen Ausschuss sind die regelmässigen Unterbrüche infolge des Einsetzens einer neuen Metallbandrolle, Austauschen der Schweisselektroden in der Profiliereinheit und Reinigung der Profilierrollen von festsitzenden Metallresten.

Aus der EP-A-0 154 931 ist ein Verfahren zur Herstellung von solchen Verbundrohren bekannt, bei denen das Innenrohr zusammen mit der ersten Kleber- oder Primerschicht coextrudiert wird. Das aufgebrachte und verschweisste Metallband wird ohne Längenänderung dem Durchmesser des Innenrohres angepasst. Dadurch wird das Metallband gestaucht, was zur unregelmässigen Dicke und zu Spannungen führt.

Aufgabe der vorliegenden Erfindung ist es daher, ein Verfahren zur Herstellung von Strängen von Verbundprofilen der oben genannten Art mit über die Länge des Stranges verbesserter Qualität herzustellen.

Diese Aufgabe wird erfindungsgemäss durch Ausschaltung von Unterbrüchen und Verminderung der Anzahl der nach jedem Unterbruch erneut miteinander abzustimmenden, aufeinanderfolgend angeordneten Arbeitsschritten im Verfahren und die Erzeugung einer homogenen Metallschicht gemäss dem Kennzeichen des Anspruches 1 gelöst. Bevorzugte Ausführungsformen des Verfahrens sind in den abhängigen Ansprüchen 2 bis 6 definiert, während die zur Durchführung des Verfahrens vorgeschlagene Anlage im Anspruch 7 umschrieben ist.

Durch die zweckmässige Zuführung eines praktisch endlosen Metallbandes als Voraussetzung für die unterbruchsfreie Verschweissung durch einen ausreichenden Bandvorrat der Profiliereinheit wird die häufigste Unterbruchsursache vermieden. Gleichzeitig wird durch Zusammenfassung von zwei (oder mehr) Extrusionsschritten zu einem einzigen Coextrusionsschritt nicht nur die Anzahl der Extrusionen vermindert, sondern zusätzliche Kühl- und Vorwärmvorgänge werden eliminiert. Die verbleibenden drei Hauptvorgänge, nämlich die erste Coextrusion, das Anbringen und Profilieren des Metallbandes und die zweite Coextrusion können mit verhältnismässig geringem Aufwand wirksam miteinander synchronisiert werden. Mit anderen Worten, durch das erfindungsgemässe Verfahren wird die durch das Unterbrechen und Anfahren verursachte Erzeugung von Ausschussware vermieden. Gleichzeitig wird der Platzbedarf der Anlage zur Durchführung des Verfahrens in der Länge stark vermindert. Durch die Anpassung des Metallbandes an das Innenprofil unter Längenänderung, d.h. Streckung, wird eine homogene, weitgehend spannungsfreie Metallschicht erzeugt.

Weitere Vorteile ergeben sich aus der nachfolgenden, rein beispielsweisen Beschreibung des Verfahrens anhand der Zeichnung. Hier wird zwar die Herstellung eines Verbundrohres beschrieben; selbstverständlich eignet sich das erfindungsgemässe Verfahren bzw. die Vorrichtung auch zur Herstellung anderer Profile. Es zeigen:

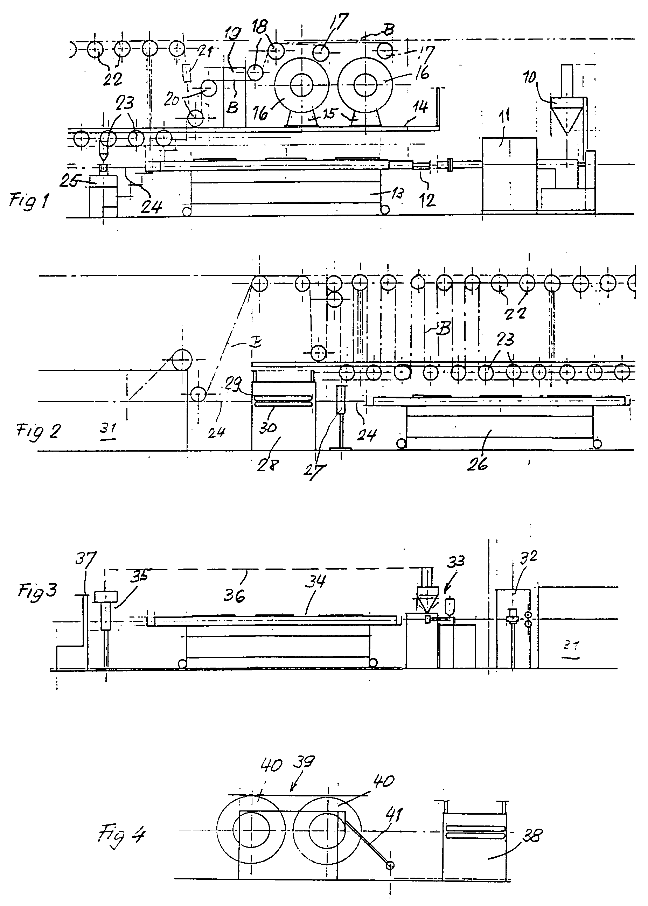

- Die Fig. 1-4: eine sehr schematische Seitenansicht einer Anlage zur Durchführung des Verfahrens bei der Herstellung von Verbundrohren, wobei die rechte Seite der Fig. 2 an die linke Seite der Fig. 1 anschliesst, die rechte Seite der Fig. 3 links an die Fig. 2 und die rechte Seite der Fig. 4 links an die Fig. 3.

Man erkennt in Fig. 1 rechts eine Zugabevorrichtung 10 zu einem für eine Coextrusion geeigneten Extruder 11, durch welche diesem das Kunststoffmaterial für das Innenrohr einerseits und für den Primer für die um das Innenrohr zu extrudierende Kleberschicht zugeführt wird. Der Extruder 11 ist vorzugsweise mit einer Coextrusionsdüse jener Art versehen, die in EP-A-0 419 985 beschrieben ist.

Im Anschluss an den Extruder 11 ist eine Kalibriervorrichtung 12 vorgesehen, auf welche zur Kühlung ein Vakuumsprühbad 13 folgt. Auf einer über dem Vakuumsprühbad 13 angeordneten Plattform 14 sind zwei Gestelle 15 je zur Aufnahme eines Haspels oder einer Rolle 16 eines Metallbandes B, beispielsweise eines Al-Bandes, montiert. Jedem der Gestelle 15 ist eine Umlenkrolle 17 zugeordnet, über die das von der betreffenden Rolle 16 gezogene Metallband abgezogen wird. Über weitere Umlenkrollen 18 gelangt dann das Band B durch eine bekannte Schweissvorrichtung 19, die dazu dient, das Ende des von einer der Rollen 16 abgezogenen Bandes an den Anfang des von der anderen Rolle abgezogenen Bandes anzuschweissen, damit ein praktisch endloses Band entsteht. Das Verschweissen der beiden Bänder erfolgt vorzugsweise mit einem Winkel von 30 bis 60°. Im Anschluss an die Schweissvorrichtung 19 wird das Band B über weitere Umlenkrollen 20 und über eine Bremse 21 einer Reihe von oberen Umlenkrollen 22 und von unteren Umlenkrollen 23 geführt, die abwechslungsweise vom Band B umschlungen sind. Die Bremse 21 tritt dann in Funktion, wenn in der Schweissvorrichtung 19 ein Schweissvorgang erfolgt und die um die Rollen 22,23 geführte Bandmenge dient dann als Vorrat für die nachfolgenden Operationen. Zu diesem Zweck kann der Abstand zwischen den beiden Reihen der Rollen 22 und 23 veränderlich sein, um auch während des Schweissvorganges den nachfolgenden Operationen kontinuierlich Band zuführen zu können. Die Rollen 22 und/oder 23 oder nur ein Teil dieser Rollen können durch nicht näher dargestellte Mittel angetrieben sein. Anstelle der hier dargestellten horizontalen Anordnung können die Rollen auch in einer vertikalen Anordnung vorliegen, wobei die Hallenhöhe ausgenützt wird.

Nach dem Durchlauf durch das Vakuumsprühbad gelangt das mit der strichpunktierten Linie 24 angedeutete, aussen mit der Primerschicht versehene Innenrohr zu einem weiteren Extruder 25, mit dem, falls erwünscht und erforderlich, die bereits vorhandene Primerschicht mit einer weiteren Primerschicht umhüllt wird. Normalerweise ist jedoch der weitere Extruder 25 nicht erforderlich.

Danach wird das Innenrohr mit der Primerschicht durch ein weiteres Vakuumsprühbad 26 (Fig. 2) geführt, bevor es eine mit einem Laser arbeitende Mess- und Reguliervorrichtung 27 durchläuft, in welcher der Aussendurchmesser des Innenrohres kontrolliert und, wenn nötig, reguliert wird.

Auf die Mess- und Reguliervorrichtung 27 folgt eine Abzugsvorrichtung 28, in der das nun bezüglich Aussendurchmesser kontrollierte und allenfalls korrigierte, mit der äusseren Primerschicht versehene Innenrohr beispielsweise zwischen zwei weichen Förderbändern 29,30 abgezogen und zu einer weiteren Station geschoben wird. Dabei wird das Innenrohr umgelenkt.

Diese weitere Station ist durch eine kombinierte Profilier- und Schweissanlage 31 gebildet, der auch das Band B aus dem zwischen den Rollen 22,23 vorhandenen Vorrat mit einer Geschwindigkeit, die in Abhängigkeit von der Ausstossgeschwindigkeit des Extruders gesteuert wird, zugeführt wird. Infolge einer (nicht dargestellten) Auslenkung des Innenrohres von seinem geraden Weg von dieser Station, kann das Metallband ohne Umlenkung mit dem Innenrohr zusammengeführt werden. In dieser, an sich bekannten Anlage, wird das Band B durch nicht dargestellte Profilierrollen aus Kunststoff oder mit einer Kunststoffoberfläche um das aussen mit dem Primer versehene Innenrohr gelegt. An den Kunststoffoberflächen der Profilierrollen haften keine Metallreste, so dass das Verfahren nicht zum Reinigen oder Auswechseln der Profilierrollen unterbrochen werden muss. Der entstehende Längsstoss zwischen den bisherigen Seitenrändern des Bandes wird verschweisst, so dass aus dem Band nun ein das Innenrohr mit dem Primer umhüllendes Metallrohr mit einer längs verlaufenden Schweissnaht entsteht. Die Schweissanlage weist eine (nicht dargestellte) Sensorensteuerung auf, welche den Abstand der Elektrode zum Schweissgut genau reguliert. Die Nachstellung der Elektroden erfolgt vollautomatisch.

Nach Durchlaufen der Profilier- und Schweissanlage 31 gelangt das nun vom Metallrohr umhüllte Innenrohr in eine Hochfrequenz-Heizanlage 32 (Fig. 3), in der nur das Metallrohr erhitzt wird, was seinerseits eine innige Verklebung der Innenseite des Metallrohres mit der Primerschicht auf der Aussenseite des Innenrohres zur Folge hat. Die mit diesem Vorgang verbundene Kalibrierung bewirkt eine Verjüngung und gleichzeitig eine Längenänderung des Metallrohres. Eine Änderung der Wandstärke erfolgt dabei nicht. Seine Querschnittsfläche verändert sich um die Durchmesserverminderung. Im Kalibrierbereich erfolgt auch die Überprüfung der Schweissnaht.

Nach dem Durchlauf durch die HF-Heizanlage 32 gelangt das Rohr nun durch einen weiteren mit einer Coextrusionsdüse versehenen Extruder 33, mit welchem auf das blanke Metallrohr zunächst eine weitere Primerschicht und über diese eine Aussenschicht aus einem Polymer aufextrudiert wird.

Auf den Extruder 33 folgt ein weiteres Sprühbad 34, in der das nun fertiggestellte Verbundrohr gekühlt wird. Auf das Sprühbad 34 folgt eine weitere Laser-Messstation 35, in der der Aussendurchmesser des gekühlten, fertiggestellten Rohres kontrolliert wird. Bei Abweichung aus dem vorgeschriebenen Toleranzfeld kann von der Messstation 35 aus der Durchsatz des Extruders 33 gesteuert werden, wie mit der gestrichelten Linie 36 angedeutet. Andererseits kann aber auch die nachfolgende Abzugsstation gesteuert werden.

Auf die Messstation 35 erfolgt eine Druckstation 37, in welcher auf die Mantelfläche des fertiggestellten Rohres unter anderen Dingen die Typenbezeichnung desselben in einem beliebigen Verfahren aufgedruckt wird. Dabei kann z.B. ein Tintenstrahldrucker, ein Prägedrucker oder aber auch ein Etikettierautomat vorgesehen sein.

Auf die Druckstation 37 folgt eine weitere Abzugsvorrichtung 38 (Fig. 4), die analog zur Abzugseinrichtung 28 (Fig. 2) aufgebaut sein kann und die das nun verkaufsfertige Rohr einer Endstation zuführt. Im vorliegenden Beispiel ist die Endstation durch eine Zwillings- oder Tandem-Wickelstation 39 gebildet, in der das anfallende Rohr kontinuierlich auf einen von zwei Haspeln 40 aufgewickelt wird. Die Wickelstation 39 kann auch mit einer Längenmesseinrichtung 41, beispielsweise mit einem Messrad versehen und durch diese gesteuert sein, um eine vorbestimmbare Länge des Rohres jeweils auf den einen oder den anderen der Haspel 40 aufzuwickeln.

Anstelle der Wickelstation kann die Endstation auch durch eine Ablängstation gebildet sein, die aus dem kontinuierlich anfallenden Rohr Rohrstücke vorbestimmter Länge abtrennt.

Soweit nicht anders vermerkt, sind die einzelnen Vorrichtungen der erfindungsgemässen Anlage bekannt und im Handel erhältlich.

## Patentansprüche

1. Verfahren zum Herstellen eines Profilstranges aus einem Kunststoff-Metall-Verbund durch kontinuierliches Coextrudieren eines Innenprofils aus Kunststoff mit aufliegender erster Kleberschicht, Aufbringen eines Metallbandes auf die Kleberschicht und Profilieren des Metallbandes und Aufbringen einer zweiten Kleberschicht und einer äusseren Kunststoffschicht, dadurch gekennzeichnet, dass man auf die erste Kleberschicht kontinuierlich ein endloses Metallband aufbringt, profiliert, unter Herbeiführung einer Längenänderung mit der ersten Kleberschicht verbindet und auf das profilierte Metallband die zweite Kleberschicht mit der darüberliegenden äusseren Kunststoffschicht kontinuierlich coextrudiert.

2. Verfahren nach Anspruch 1, dadurch gekennzeichnet, dass ein Kunststoff-Metall-Kunststoff-Verbundrohr hergestellt wird.

3. Verfahren nach einem der vorangehenden Ansprüche, dadurch gekennzeichnet, dass die Zulieferung des Metallbandes aufgrund der Ausstossgeschwindigkeit bei der Coextrusion des Innenprofils mit der ersten Kleberschicht gesteuert wird.

4. Verfahren nach einem der vorangehenden Ansprüche, dadurch gekennzeichnet, dass man das Aussenmass des mit der ersten Kleberschicht versehenen Innenprofils mittels Vakuum-Sprühkalibrierung einstellt.

5. Verfahren nach einem der vorangehenden Ansprüche, dadurch gekennzeichnet, dass beim Einsetzen einer neuen Metallbandrolle das Ende der vorangehenden Bandrolle mit dem Anfang der neuen Bandrolle verschweisst wird, wobei mit einem solchen Vorrat an bereits von der vorangehenden Bandrolle abgezogenem Metallband gearbeitet wird, dass das Profilieren des Metallbandes ohne Betriebsunterbruch erfolgt.

6. Verfahren nach einem der vorangehenden Ansprüche, dadurch gekennzeichnet, dass man das Metallband geradlinig, ohne Umlenkung mit dem Innenprofil mit der ersten Kleberschicht zusammenführt.

7. Anlage zur Durchführung des Verfahrens nach einem der vorangehenden Ansprüche mit einer ersten Coextrusionseinheit (11) für das Innenprofil mit der ersten Kleberschicht, einer Profiliereinheit (31) für das Metallband (B) und einer zweiten Extrusionseinheit für die Kunststoffaussenschicht, dadurch gekennzeichnet, dass der Profiliereinheit (31) ein Mittel (19,20,21, 22,23) zur Bildung eines endlosen Metallbandvorrates zugeordnet und eine Kalibriervorrichtung nachgeordnet ist, wobei die Kalibriervorrichtung derart ausgebildet ist, daß beim Kalibrieren eine Längenänderung erfolgt und die zweite Extrusionseinheit als Coextrusionseinheit (33) ausgebildet ist.

8. Anlage nach Anspruch 7, dadurch gekennzeichnet, dass im Anschluss an die erste Coextrusionseinheit (11) eine Sprühkalibriereinrichtung (12) angeordnet ist.

9. Anlage nach einem der Ansprüche 7 oder 8, dadurch gekennzeichnet, dass die Profiliereinheit (31) Profilierrollen mit einer wirksamen Oberfläche aus Kunststoff aufweist.

## Claims

1. Method for manufacturing an extrudate from a plastic-metal composite by continuously coextruding an inner plastic profile with a superficial first adhesive layer, applying a metal strip to the adhesive layer and profiling the metal strip and applying a second adhesive layer and an outer plastic layer, characterized in that a endless metal strip is applied continuously to the first adhesive layer, is profiled and is bonded to the first adhesive layer, causing a length change, and the second adhesive layer with the superjacent outer plastic layer is coextruded continuously onto the profiled metal strip.

2. Method according to Claim 1, characterized in that a plastic-metal-plastic composite pipe is manufactured.

3. Method according to one of the preceding claims, characterized in that the feeding of the metal strip is controlled on the basis of the output rate during the coextrusion of the inner profile with the first adhesive layer.

4. Method according to one of the preceding claims, characterized in that the external dimension of the inner profile provided with the first adhesive layer is adjusted by means of vacuum-spray calibration.

5. Method according to one of the preceding claims, characterized in that, when a new metal strip roll is inserted, the end of the previous strip roll is welded to the start of the new strip roll, a supply of metal strip already taken off from the previous strip roll being used which is sufficient for the profiling of the metal strip to take place without interruption of operation.

6. Method according to one of the preceding claims, characterized in that the metal strip is brought together with the inner profile with the first adhesive layer in a straight line without deflection.

7. Installation for carrying out the method according to one of the preceding claims with a first coextrusion unit (11) for the inner profile with the first adhesive layer, a profiling unit (31) for the metal strip (B) and a second extrusion unit for the plastic outer layer, characterized in that a means (19, 20, 21, 22, 23) for forming a endless metal strip supply is allocated to the profiling unit (31) and a calibration device is arranged downstream thereof, the calibration device being designed such that a length change takes place during calibration, and the second extrusion unit is designed as a coextrusion unit (33).

8. Installation according to Claim 7, characterized in that a spray calibration device (12) is arranged following the first coextrusion unit (11).

9. Installation according to one of Claims 7 or 8, characterized in that the profiling unit (31) has profiling rolls with a working surface made of plastic.

## Revendications

1. Procédé de fabrication d'une ligne de profilés avec un composite plastique-métal par coextrusion en continu d'un profilé intérieur en plastique sur lequel est déposée une première couche d'adhésif, suivi d'un dépôt d'un ruban métallique sur la couche d'adhésif et d'un profilage du ruban métallique, et d'un dépôt d'une deuxième couche d'adhésif et d'une couche de plastique externe, caractérisé en ce qu'on effectue le dépôt et le profilage en continu d'un ruban métallique sans fin sur la première couche d'adhésif, en ce qu'on le joint à la première couche d'adhésif tout en effectuant une variation de sa longueur, et en ce qu'on coextrude en continu la deuxième couche d'adhésif avec la couche de plastique externe la recouvrant sur le ruban métallique profilé.

2. Procédé selon la revendication 2, caractérisé en ce qu'on fabrique un tube composite plastique-métal-plastique.

3. Procédé selon l'une quelconque des revendications précédentes, caractérisé en ce que l'apport du ruban métallique est contrôlé en fonction de la vitesse de sortie, lors de la coextrusion du profilé intérieur ayant la première couche d'adhésif.

4. Procédé selon l'une quelconque des revendications précédentes, caractérisé en ce que l'on ajuste la dimension extérieure du profilé intérieur pourvu de la première couche d'adhésif au moyen d'un calibrage par pulvérisation sous vide.

5. Procédé selon l'une quelconque des revendications précédentes, caractérisé en ce qu'à l'insertion d'un nouveau rouleau de ruban métallique, la fin du rouleau de ruban précédent est soudé avec le début du rouleau de ruban suivant, ce par quoi on s'efforce de réaliser le profilage du ruban métallique sans interruption de fonctionnement,grâce à un tel stock de ruban métallique déjà tiré par le rouleau de ruban précédent.

6. Procédé selon l'une quelconque des revendications précédentes, caractérisé en ce que l'on réunit le ruban métallique sans déviation avec le profilé intérieur ayant la première couche d'adhésif.

7. Installation pour la mise en oeuvre du procédé selon l'une quelconque des revendications précédentes, avec une première unité de coextrusion (11) pour le profilé intérieur ayant la première couche d'adhésif, une unité de profilage (31) pour le ruban métallique (B) et une deuxième unité d'extrusion pour la couche extérieure en plastique, caractérisée en ce qu'un moyen (19, 20, 21, 22, 23) pour constituer un stock de ruban métallique sans fin est placé avant l'unité de profilage (31), et un dispositif de calibrage après celle-ci, le dispositif de calibrage étant conçu de telle sorte qu'il se produise une variation de longueur lors du calibrage, et en ce que la deuxième unité d'extrusion constitue une unité de coextrusion (33).

8. Installation selon la revendication 7, caractérisée en ce qu'un dispositif de calibrage par pulvérisation (12) est disposé à la suite de la première unité de coextrusion (11).

9. Installation selon l'une ou l'autre des revendications 7 et 8, caractérisé en ce que l'unité de profilage (31) présente des rouleaux de profilage ayant une surface active en plastique.
